# EUROPÄISCHE PATENTSCHRIFT

(11) **EP 3 529 879 B1**
(45) Veröffentlichungstag und Bekanntmachung des Hinweises auf die Patenterteilung: **05.04.2023**
(21) Anmeldenummer: 17781080.1
(22) Anmeldetag: 05.10.2017
(51) Int. Cl.: H02K 5/132, F02M 37/00, F02M 37/10

(54) **KRAFTSTOFFPUMPE**
FUEL PUMP
POMPE À CARBURANT

(30) Priorität: 20.10.2016 DE 102016220638
(43) Veröffentlichungstag der Anmeldung: 28.08.2019
(73) Patentinhaber: Vitesco Technologies GmbH, 93055 Regensburg (DE)
(72) Erfinder: BECKER, Dirk, 36211 Alheim (DE); BÄMPFER, Michael, 36199 Rotenburg (DE); MISSUN, Jens, 34225 Baunatal (DE); VÖLKER, Marc, 39116 Magdeburg (DE)
(74) Vertreter: Vitesco Technologies
(86) Internationale Anmeldenummer: PCT/EP2017/075278
(87) Internationale Veröffentlichungsnummer: WO 2018/073009

(56) Entgegenhaltungen:
- DE-A1-102005 015 014
- JP-B2- 5 338 733

## Beschreibung

Die Erfindung betrifft eine Kraftstoffpumpe mit einem Elektromotor und mit einer Pumpenstufe, mit einem Motorgehäuse des Elektromotors, mit einem Pumpengehäuse der Pumpenstufe und mit einem Ränder des Motorgehäuses und des Pumpengehäuses hintergreifenden Blechmantel, wobei das Motorgehäuse zur Halterung eines einen Rotor umschließenden Stators des Elektromotors ausgebildet ist, wobei das Motorgehäuse einen den Stator halternden Abschnitt aus Kunststoff hat und wobei, von dem Stator aus gesehen, der Rand des Motorgehäuses für den Blechmantel auf der dem Pumpengehäuse zugewandten Seite angeordnet ist.

Solche Kraftstoffpumpen werden in heutigen Kraftfahrzeugen häufig eingesetzt und sind aus der Praxis bekannt. Bei der bekannten Kraftstoffpumpe sind der Elektromotor und die Pumpenstufe derart mit dem Blechmantel verrollt, dass sowohl der Elektromotor als auch die Pumpenstufe eingekapselt und dabei dichtend umschlossen sind. Eine Druckseitig ausgebildete Schnittstelle zum Elektromotor einerseits und eine saugseitige Anordnung einer axial wirkenden Dichtung oder Axialdichtung andererseits beeinflussen sich eine beim Verrollen des Blechmantels einstellende Verspannung der Pumpenstufe. Diese Verspannung erstreckt sich dabei über die gesamte Pumpenstufe und führt zu einer statisch über- oder unbestimmten Einbausituation der Pumpenstufe.

Die Pumpenstufe der Kraftstoffpumpe kann als Peripheralpumpe, als Seitenkanalpumpe oder als Schraubenpumpe ausgebildet sein.

Nachteilig bei der bekannten Kraftstoffpumpe ist jedoch, dass der Blechmantel ein sehr kostenintensives Bauteil darstellt. Zudem verschließt der Blechmantel den radialen Umfang des Elektromotors und der Pumpenstufe, so dass sämtliche Anschlüsse der Kraftstoffpumpe axial weggeführt sind. Die bekannte Kraftstoffpumpe weist daher besonders große axiale Abmessungen auf. Große axiale Abmessungen sind jedoch sehr störend, wenn die Kraftstoffpumpe innerhalb eines Kraftstoffbehälters angeordnet werden soll.

Die Druckschrift DE 10 2005 015 014 A1 offenbart eine Kraftstoffpumpe mit einem Elektromotor, der eine Pumpenstufe antreibt, durch die Kraftstoff förderbar ist. Der Elektromotor weist einen Stator und einen Rotor auf. Das Motorgehäuse des Elektromotors ist über einen Blechmantel mit einem Pumpenstufengehäuse der Pumpenstufe verbunden, indem der Blechmantel mit dem Motorgehäuse vergossen wird.

Die Druckschrift JP 5338733 B2 offenbart eine Kraftstoffpumpe mit einem Elektromotor, einem Motorgehäuse, indem der Elektromotor aufgenommen ist, einer Pumpenstufe und einem Pumpenstufengehäuse, indem die Pumpenstufe aufgenommen ist. Das Pumpenstufengehäuse ist an dem Motorgehäuse über eine Rastverbindung fixiert.

Der Erfindung liegt das Problem zugrunde, eine Kraftstoffpumpe der eingangs genannten Art so weiter zu bilden, dass sie besonders kostengünstig zu fertigen ist und besonders niedrige Abmessungen aufweist.

Dieses Problem wird erfindungsgemäß dadurch gelöst, dass der Blechmantel die Ränder mit jeweils einer Verrollung hintergreift, derart, dass das Pumpengehäuse gegen das Motorgehäuse vorgespannt ist.

Durch diese Gestaltung erstreckt sich der Blechmantel ausschließlich von dem dem Pumpengehäuse zugewandten Rand des Motorgehäuses bis über das Pumpengehäuse. Der überwiegende Bereich des Elektromotors ist dank der Erfindung nicht von dem Blechmantel umfasst. Damit lässt sich der Blechmantel besonders kurz gestalten. Die erfindungsgemäße Kraftstoffpumpe lässt sich daher besonders kostengünstig fertigen. Weiterhin lassen sich Anschlüsse von dem aus Kunststoff gefertigten Abschnitt des Elektromotors radial abführen. Dies trägt zu besonders geringen Abmessungen der Kraftstoffpumpe bei.

Die Kraftstoffpumpe lässt sich gemäß einer anderen vorteilhaften Weiterbildung der Erfindung besonders kostengünstig fertigen, wenn die Höhe des Blechmantels maximal 50 % der Summe der Höhen des Pumpengehäuses und des Motorgehäuses beträgt.

Bei bekannten Kraftstoffpumpen sind Anschlusskontakte des Stators in der Regel von Kraftstoff umströmt. Zur Vermeidung von Korrosion sind sehr kostenintensive Abdichtungen und Beschichtungen der Anschlusskontakte bekannt. Kostenintensive Abdichtungen von Anschlusskontakten des Elektromotors lassen sich gemäß einer anderen vorteilhaften Weiterbildung der Erfindung einfach vermeiden, wenn Anschlusskontakte des Stators von dem Kunststoff des Motorgehäuses dichtend eingeschlossen sind. Vorzugsweise ist der aus Kunststoff gefertigte Abschnitt des Motorgehäuses besonders kostengünstig im Spritzgussverfahren gefertigt.

Zur Verringerung der axialen Bauhöhe der Kraftstoffpumpe trägt es gemäß einer anderen vorteilhaften Weiterbildung der Erfindung bei, wenn zu dem Elektromotor führende Anschlussleitungen radial in den aus Kunststoff gefertigten Abschnitt des Motorgehäuses geführt sind.

Die Anzahl der Bauteile der Kraftstoffpumpe lassen sich gemäß einer anderen vorteilhaften Weiterbildung der Erfindung besonders gering halten, wenn der aus Kunststoff gefertigte Abschnitt des Motorgehäuses einen Anschlussstutzen für eine Kraftstoffleitung hat. Durch diese Gestaltung wird ein separat zu montierender Deckel für den Anschlussstutzen vermieden.

Die Kraftstoffpumpe weist gemäß einer anderen vorteilhaften Weiterbildung der Erfindung eine besonders geringe Bauhöhe auf, wenn der Anschlussstutzen radial von dem Motorgehäuse weg geführt ist. Durch diese Gestaltung lässt sich die Kraftstoffpumpe auch in niedrigen Kraftstoffbehältern anordnen.

Zur weiteren Verringerung der axialen Abmessungen der Kraftstoffpumpe trägt es gemäß einer anderen vorteilhaften Weiterbildung der Erfindung bei, wenn der Anschlussstutzen auf der axialen Höhe des Stators angeordnet ist.

Kanäle zur Führung von Kraftstoff durch die Kraftstoffpumpe lassen sich gemäß einer anderen vorteilhaften Weiterbildung der Erfindung besonders einfach fertigen, wenn ein zu einem dem Anschlussstutzen führender Deckel eines Kanals auf dem aus Kunststoff gefertigten Abschnitt des Motorgehäuses abgedichtet ist. Die Abdichtung erfolgt vorzugsweise im Schweißverfahren, beispielsweise durch Spiegelschweißen, oder durch Verklebung.

Der aus Kunststoff gefertigte Abschnitt des Motorgehäuses lässt sich gemäß einer anderen vorteilhaften Weiterbildung der Erfindung in einer besonders einfachen Werkzeugform fertigen, wenn ein Abschnitt des Kraftstoff führenden Kanals parallel zur Achse des Rotors von der dem Pumpengehäuse abgewandten Ende in das Motorgehäuse geführt ist.

Eine separat zu montierende Lagerung des Rotors des Elektromotors lässt sich gemäß einer anderen vorteilhaften Weiterbildung der Erfindung vermeiden, wenn der Rotor des Elektromotors mit einem Ende an dem Pumpengehäuse und mit dem anderem Ende in dem aus Kunststoff gefertigten Abschnitt des Motorgehäuses gelagert ist.

Die Montage der Kraftstoffpumpe gestaltet sich gemäß einer anderen vorteilhaften Weiterbildung der Erfindung besonders einfach, wenn der den Stator halternde Abschnitt des Motorgehäuses eine dem Pumpengehäuse zugewandte offene Seite zur Einführung des Rotors hat. Durch diese Gestaltung lässt sich der Elektromotor von einer Seite, nämlich der der Pumpenstufe zugewandten Seite montieren.

Die Kraftstoffpumpe gestaltet sich gemäß einer anderen vorteilhaften Weiterbildung der Erfindung konstruktiv besonders einfach, wenn der aus Kunststoff gefertigte Abschnitt Stützarme zur Abstützung der Lagerung des Rotors hat und dass ein Kanal zur Führung des Kraftstoffs zwischen den Stützarmen hindurchführt.

Die Abdichtung der Kraftstoffpumpe gestaltet sich gemäß einer anderen vorteilhaften Weiterbildung der Erfindung konstruktiv besonders einfach, wenn zwischen dem Pumpengehäuse und dem Blechmantel ein radial dichtender Dichtring angeordnet ist. Der Dichtring kann als Elastomer O-Ring ausgebildet sein. Alternativ dazu kann der Dichtring auch als Rundschnurrring ausgebildet sein. Solche Rundschnurringe werden im Extrusionsverfahren als Schnur gefertigt und auf Stoß miteinander durch Klebung oder Vulkanisierung verbunden.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig. 1: eine in einem Kraftstoffbehälter montierte Kraftstofffördereinheit,
- Fig. 2: einen Längsschnitt durch eine Kraftstoffpumpe der Kraftstofffördereinheit aus Figur 1,
- Fig. 3: eine Draufsicht auf die Kraftstoffpumpe aus Figur 2,
- Fig. 4: eine weitere Ausführungsform einer in einem Kraftstoffbehälter montierte Kraftstofffördereinheit,
- Fig. 5: einen Längsschnitt durch eine Kraftstoffpumpe der Kraftstofffördereinheit,
- Fig. 6: einen Längsschnitt durch eine weitere Ausführungsform der Kraftstoffpumpe,
- Fig. 7: eine Seitenansicht der Kraftstoffpumpe aus Figur 6,
- Fig. 8: eine Draufsicht auf die Kraftstoffpumpe aus Figur 6.

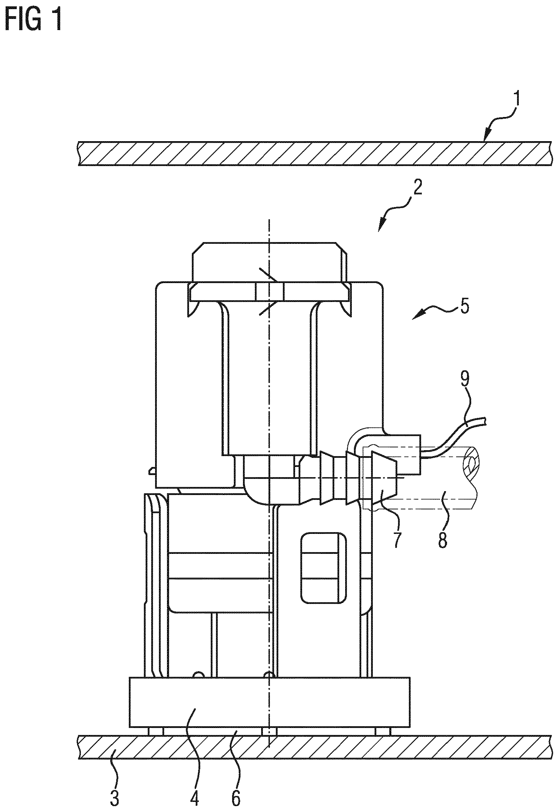

Figur 1 zeigt einen Teilbereich eines geschnitten dargestellten Kraftstoffbehälters 1 mit einer darin angeordneten Kraftstofffördereinheit. Die Kraftstofffördereinheit 2 hat einen gegen den Boden 3 des Kraftstoffbehälters 1 vorgespannten Halter 4 für eine Kraftstoffpumpe 5 mit einem Vorfilter 6. Ein Anschlussstutzen 7 zur Verbindung mit einer Kraftstoff abführenden Kraftstoffleitung 8 ist radial von der Kraftstoffpumpe 5 weg geführt. Elektrische Anschlussleitungen 9 zur Versorgung der Kraftstoffpumpe 5 mit elektrischem Strom sind ebenfalls radial von der Kraftstoffpumpe 5 weggeführt. Der Anschlussstutzen 7 und die Anschlussleitungen 9 sind in einem axialen mittleren Bereich der Kraftstoffpumpe 5 angeordnet.

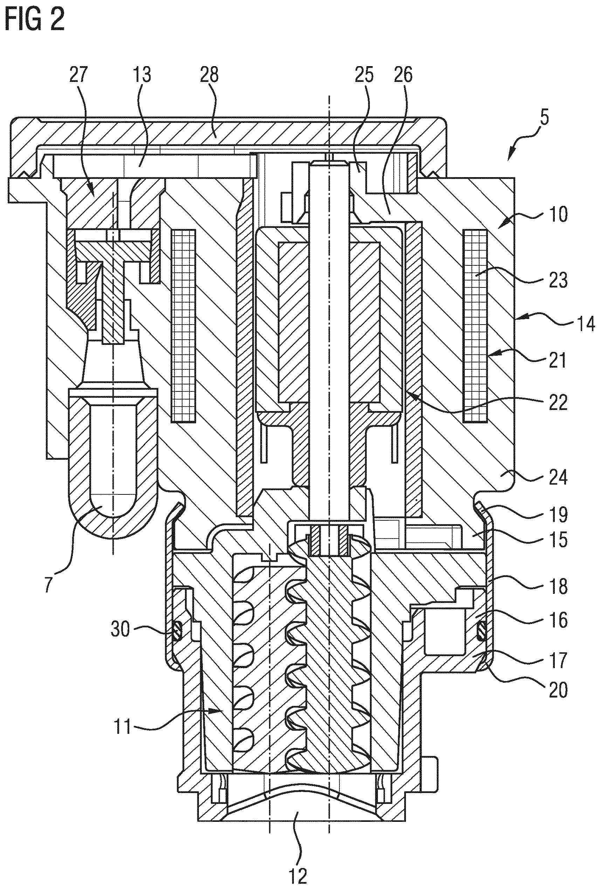

Figur 2 zeigt einen Längsschnitt durch die Kraftstoffpumpe 5 aus Figur 1. Hierbei ist zu erkennen, dass ein Elektromotor 10 eine Pumpenstufe 11 antreibt. Die Pumpenstufe 11 saugt Kraftstoff über einen Ansaugstutzen 12 an und fördert diesen durch den Elektromotor 10 über einen Kanal 13 zu dem Anschlussstutzen 7. Der Elektromotor 10 hat ein gefertigtes Motorgehäuse 14 mit einem der Pumpenstufe 11 zugewandten Rand 15. Die Pumpenstufe 11 hat ein Pumpengehäuse 16 mit ebenfalls einem Rand 17. Ein Blechmantel 18 hintergreift die Ränder mit jeweils einer Verrollung 19, 20 und spannt damit das Pumpengehäuse 16 gegen das Motorgehäuse 14 vor.

Der Elektromotor 10 hat einen Stator 21 und einen mit der Pumpenstufe 11 verbundenen Rotor 22. Spulen 23 oder Permanentmagnete des Stators 11 sind innerhalb eines aus Kunststoff gefertigten Abschnitts 24 angeordnet und von diesem umspritzt. Der Rotor 22 ist in der Pumpenstufe 11 gelagert und hat eine weitere Lagerung 25 in dem von der Pumpenstufe 11 abgewandten Ende des aus Kunststoff gefertigten Abschnitts 24 des Motorgehäuses 14. Diese Lagerung 25 ist von mehreren Stützarmen 26 des Motorgehäuses 14 gehalten. Zwischen den Stützarmen 26 strömt der Kraftstoff von der Pumpenstufe 11 zu dem Anschlussstutzen 7.

In dem zur Führung von Kraftstoff vorgesehenen Kanal 13 ist ein Rückschlagventil 27 angeordnet. Der Kanal 13 ist an einem in dem von der Pumpenstufe 11 abgewandten Seite des Motorgehäuses 14 angeordneten Abschnitt 24 von einem Deckel 28 verschlossen. Der Deckel 28 ist dichtend mit dem aus Kunststoff gefertigten Abschnitt 24 des Motorgehäuses 14 verbunden. Die dichtende Verbindung ist beispielsweise im Schweißverfahren oder durch Verklebung erzeugt. Ein beispielsweise als O-Ring oder Rundschnurring ausgebildeter Dichtring 30 dichtet das Pumpengehäuse 16 radial gegenüber dem Blechmantel 18 ab.

Die radiale Abdichtung des Pumpengehäuses 16 gegenüber dem Blechmantel 18 wird eine schwimmende Zentrierung der Pumpenstufe erreicht. Zudem kann der Verrollbereich des Blechmantels 18 an der Pumpenstufe 16 hin zur Druckseite der Pumpenstufe 16 verlagert werden, so dass sich die Länge des Blechmantels 18 weiter reduzieren lässt.

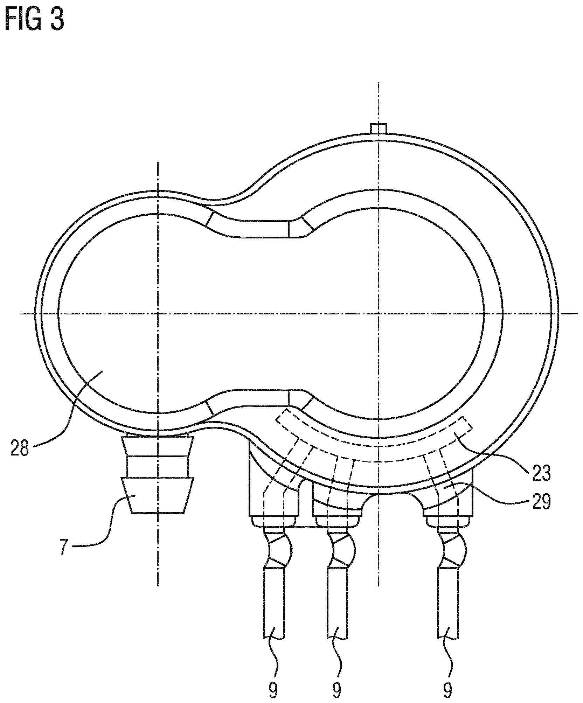

Figur 3 zeigt die Kraftstoffpumpe 5 in einer Draufsicht auf den Deckel 28. Hierbei ist zu erkennen, dass die Anschlussleitungen 9 in den aus Kunststoff gefertigten Abschnitt 24 des Motorgehäuses 14 geführt und von diesem teilweise umspritzt sind. Ebenso sind Anschlusskontakte 29, welche eine leitende Verbindung der Kraftstoffpumpe 5 mit den Anschlussleitungen 9 herstellen, von dem Kunststoff des Abschnitts 24 des Motorgehäuses 14 umspritzt.

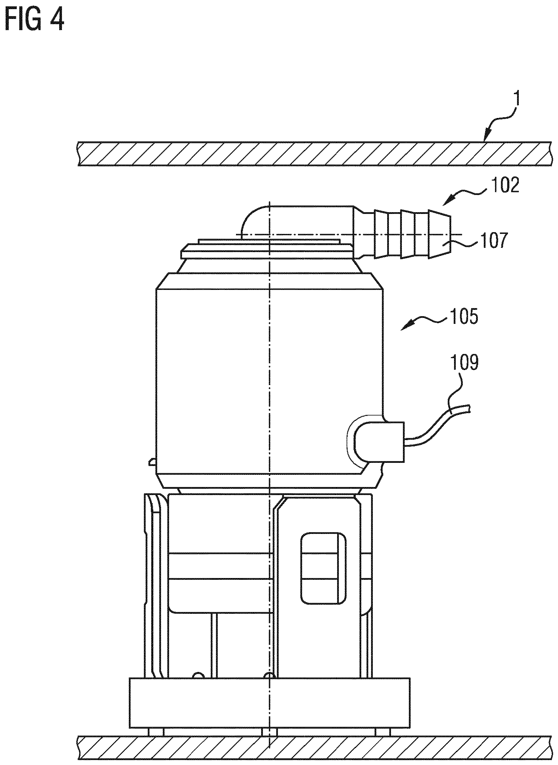

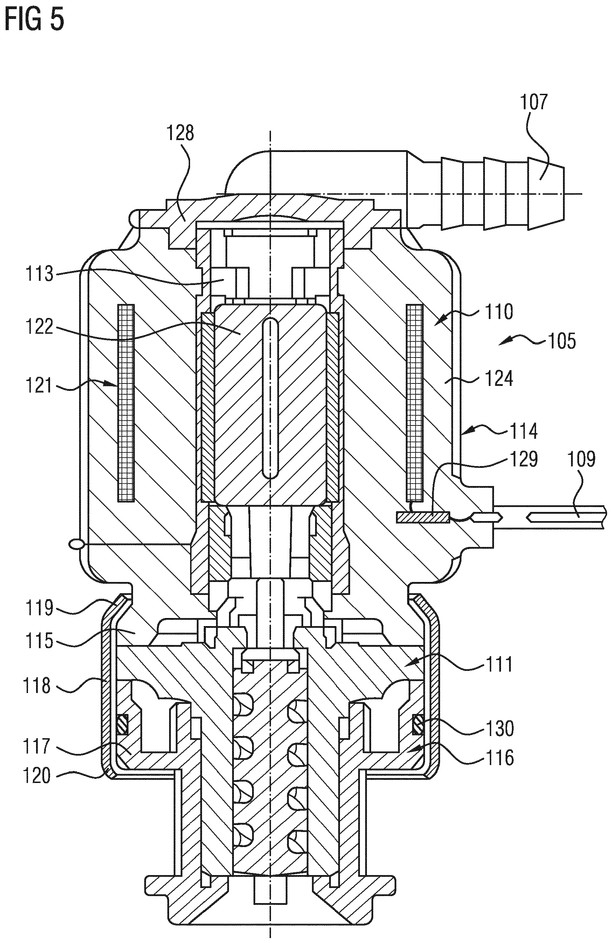

Figur 4 zeigt eine weitere Ausführungsform einer Kraftstofffördereinheit 102 mit einer Kraftstoffpumpe 105. Figur 5 zeigt die Kraftstoffpumpe 105 in einem Längsschnitt. Diese unterscheidet sich von der aus den Figuren 1 bis 3 dadurch, ein Kraftstoff führender Kanal 113 durch eine einer Pumpenstufe 111 abgewandten Stirnseite eines Elektromotors 110 weg geführt ist. Ein die Stirnseite abschließender Deckel 128 trägt einen Anschlussstutzen 107 für eine Kraftstoffleitung und ist gegenüber einem aus Kunststoff gefertigten Abschnitt 124 des Motorgehäuses 114 abgedichtet. Zu dem Elektromotor 110 führende Anschlussleitungen 109 führen radial in einen aus Kunststoff gefertigten Abschnitt 104 des Motorgehäuses 114 hinein. Anschlusskontakte 129 der Kraftstoffpumpe 105 sind von dem Kunststoff umspritzt. Das Pumpengehäuse 116 ist radial mittels eines Dichtrings 130 gegenüber einem Blechmantel 118 abgestützt. Der Blechmantel 118 spannt durch Verrollungen 119, 120 einen Rand 115 des Motorgehäuses 114 und einen Rand 117 des Pumpengehäuses 116 gegeneinander vor. Der Rand 115 des Motorgehäuses 114 ist von dem Stator 121 aus gesehen auf der dem Pumpengehäuse 116 zugewandten Seite angeordnet. Ein Rotor 122 ist in der Pumpenstufe 111 und in dem aus Kunststoff gefertigten Abschnitt 124 des Motorgehäuses 114 angeordnet.

Bei den Kraftstoffpumpen 5, 105 aus den Figuren 1 bis 5 sind die Pumpenstufen 11, 111 als Schraubenpumpen ausgebildet. Zwei Schraubenspindeln der Pumpenstufen 11, 111 bilden in Verbindung mit dem Pumpengehäuse 16, 116 Förderkammern, welche sich infolge er Drehung der Schraubenspindeln, von einer Saugseite zu einer Druckseite der Pumpenstufe 11, 111 bewegen. In einer alternativen, nicht dargestellten Ausführungsform können die Pumpenstufen auch als Seitenkanal oder als Peripheralpumpe ausgebildet sein.

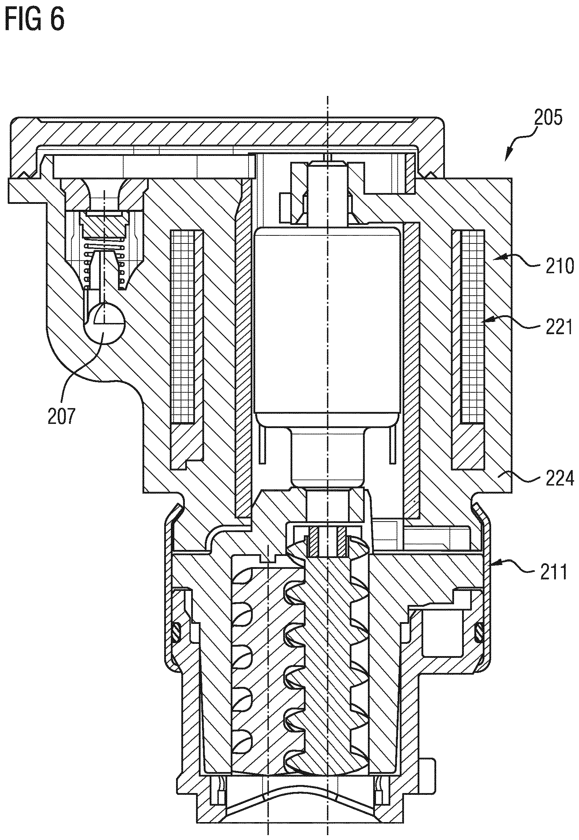

Figur 6 zeigt einen Längsschnitt durch eine weitere Ausführungsform einer Kraftstoffpumpe 205. Diese unterscheidet sich von der aus Figur 2 dadurch, dass ein Anschlussstutzen 207 für die in Figur 1 dargestellte Vorlaufleitung 8 einstückig mit einem einen Stator 221 halternden Abschnitt 224 eines Elektromotors 210 gefertigt ist.

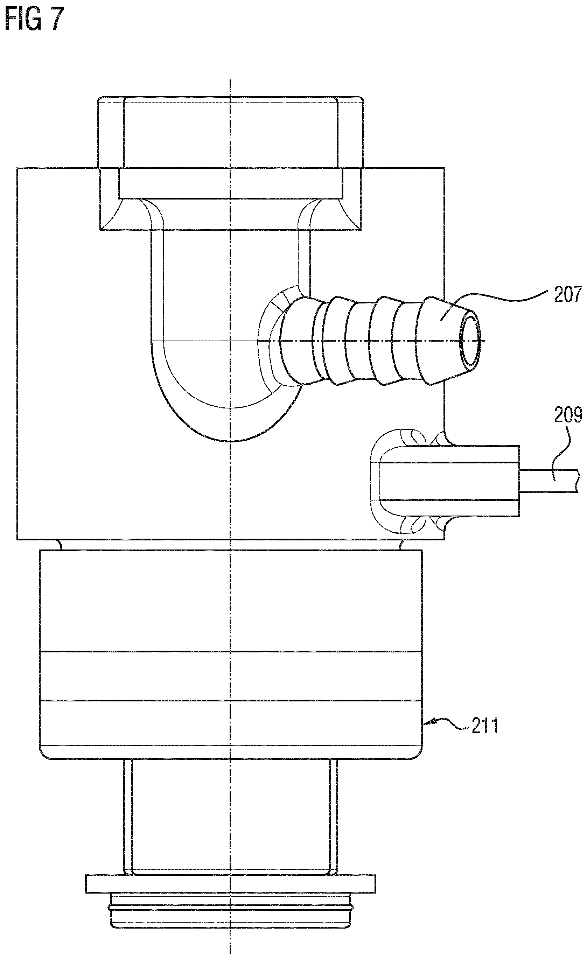

Figur 7 zeigt eine Seitenansicht der Kraftstoffpumpe 205 aus Figur 6. Hierbei ist zu erkennen, dass zu dem Stator 221 führende Anschlussleitungen 209 näher an einer Pumpenstufe 211 angeordnet sind als der Anschlussstutzen 207.

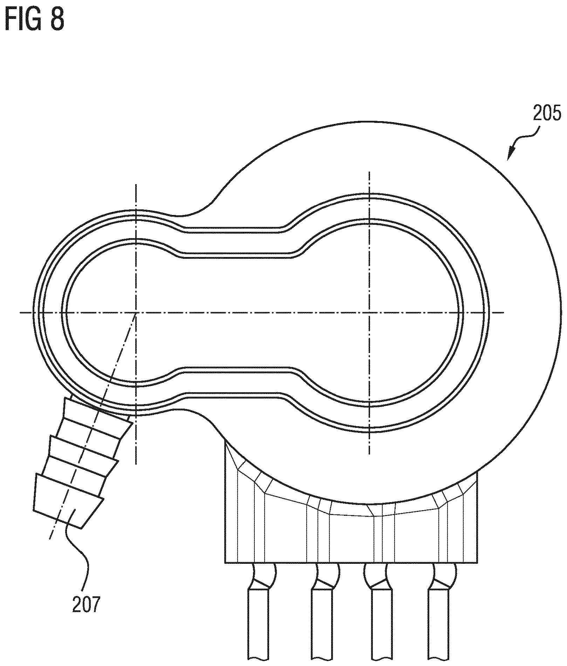

Figur 8 zeigt in einer Draufsicht die Kraftstoffpumpe 205 aus Figur 6, dass der Anschlussstutzen 207 gegenüber Symmetrieachsen der Kraftstoffpumpe 205 abgewinkelt ist. Ansonsten ist die Ausführungsform der Kraftstoffpumpe 205 nach den Figuren 6 bis 8 im Wesentlichen wie die aus den Figuren 1 bis 3 aufgebaut.

## Patentansprüche

1. Kraftstoffpumpe (5, 105, 205) mit einem Elektromotor (10, 110, 210) und mit einer Pumpenstufe (11, 111, 211), mit einem Motorgehäuse (14, 114) des Elektromotors (10, 110, 210), mit einem Pumpengehäuse (16, 116) der Pumpenstufe (11, 111, 211) und mit einem Ränder (15, 17, 115, 117) des Motorgehäuses (14, 114) und des Pumpengehäuses (16, 116) hintergreifenden Blechmantel (18, 118), wobei das Motorgehäuse (14, 114) zur Halterung eines einen Rotor (22, 222) umschließenden Stators (21, 121, 221) des Elektromotors (10, 110, 210) ausgebildet ist, wobei das Motorgehäuse (14, 114) einen den Stator (21, 121, 221) halternden Abschnitt (24, 124, 224) aus Kunststoff hat, wobei, von dem Stator (24, 124, 224) aus gesehen, der Rand (15, 115) des Motorgehäuses (14, 114) für den Blechmantel (18) auf der dem Pumpengehäuse (16, 116) zugewandten Seite angeordnet ist, **dadurch gekennzeichnet, dass** der Blechmantel (18) die Ränder (15, 17, 115, 117) mit jeweils einer Verrollung (19, 20) hintergreift, derart, dass das Pumpengehäuse (16, 116) gegen das Motorgehäuse (14, 114) vorspannt ist.

2. Kraftstoffpumpe nach Anspruch 1, **dadurch gekennzeichnet, dass** die Höhe des Blechmantels (18, 118) maximal 50 % der Summe der Höhen des Pumpengehäuses (16, 116) und des Motorgehäuses (14, 114) beträgt.

3. Kraftstoffpumpe nach Anspruch 1 oder 2, **dadurch gekennzeichnet, dass** Anschlusskontakte (29, 129) des Stators (21, 121, 221) von dem Kunststoff des Motorgehäuses (14, 114) dichtend eingeschlossen sind.

4. Kraftstoffpumpe nach einem der Ansprüche 1 bis 3, **dadurch gekennzeichnet, dass** zu dem Elektromotor (10, 110) führende Anschlussleitungen (9, 109, 209) radial in den aus Kunststoff gefertigten Abschnitt (24, 124, 224) des Motorgehäuses (14, 114) geführt sind.

5. Kraftstoffpumpe nach einem der Ansprüche 1 bis 4, **dadurch gekennzeichnet, dass** der aus Kunststoff gefertigte Abschnitt (24, 124, 224) des Motorgehäuses (14, 114) einen Anschlussstutzen (7, 107, 207) für eine Kraftstoffleitung (8, 108) hat.

6. Kraftstoffpumpe nach Anspruch 5, **dadurch gekennzeichnet, dass** der Anschlussstutzen (7, 107, 207) radial von dem Motorgehäuse weggeführt ist.

7. Kraftstoffpumpe nach Anspruch 5 oder 6, **dadurch gekennzeichnet, dass** der Anschlussstutzen (7, 207) auf der axialen Höhe des Stators (21, 221) angeordnet ist.

8. Kraftstoffpumpe nach einem der Ansprüche 5 bis 7, **dadurch gekennzeichnet, dass** ein zu einem dem Anschlussstutzen (7, 107, 207) führender Deckel (28, 128) eines Kanals (13, 113) auf dem aus Kunststoff gefertigten Abschnitt (24, 124, 224) des Motorgehäuses (14, 114) abgedichtet ist.

9. Kraftstoffpumpe nach Anspruch 8, **dadurch gekennzeichnet, dass** ein Abschnitt des Kraftstoff führenden Kanals (13) parallel zur Achse des Rotors (22) von der dem Pumpengehäuse (16) abgewandten Ende in das Motorgehäuse (14) geführt ist.

10. Kraftstoffpumpe nach einem der Ansprüche 1 bis 9, **dadurch gekennzeichnet, dass** der Rotor (22, 122) des Elektromotors (10, 110) mit einem Ende an dem Pumpengehäuse (16, 116) und mit dem anderem Ende in dem aus Kunststoff gefertigten Abschnitt (24, 124, 224) des Motorgehäuses (14, 114) gelagert ist.

11. Kraftstoffpumpe nach Anspruch 10, **dadurch gekennzeichnet, dass** der den Stator (21, 121, 221) halternde Abschnitt (24, 124, 224) des Motorgehäuses (14, 114) eine dem Pumpengehäuse (16, 116) zugewandte offene Seite zur Einführung des Rotors (22, 122) hat.

12. Kraftstoffpumpe nach Anspruch 10 oder 11, **dadurch gekennzeichnet, dass** der aus Kunststoff gefertigte Abschnitt (24, 124, 224) Stützarme (26) zur Abstützung der Lagerung (25) des Rotors (22, 122) hat und dass der Kanal (13, 113) zur Führung des Kraftstoffs zwischen den Stützarmen (26) hindurchführt.

13. Kraftstoffpumpe nach einem der Ansprüche 1 bis 12, **dadurch gekennzeichnet, dass** zwischen dem Pumpengehäuse (16, 116) und dem Blechmantel (18, 118) ein radial dichtender Dichtring (30, 130) angeordnet ist.

## Claims

1. Fuel pump (5, 105, 205) with an electric motor (10, 110, 210) and with a pump stage (11, 111, 211), with a motor housing (14, 114) of the electric motor (10, 110, 210), with a pump housing (16, 116) of the pump stage (11, 111, 211), and with a sheet metal shell (18, 118) which engages behind edges (15, 17, 115, 117) of the motor housing (14, 114) and the pump housing (16, 116), the motor housing (14, 114) being configured to secure a stator (21, 121, 221), enclosing a rotor (22, 222), of the electric motor (10, 110, 210), the motor housing (14, 114) having a portion (24, 124, 224) made from plastic which secures the stator (21, 121, 221), the edge (15, 115) of the motor housing (14, 114) for the sheet metal shell (18) being arranged on the side which faces the pump housing (16, 116) as viewed from the stator (24, 124, 224), **characterized in that** the sheet metal shell (18) engages behind the edges (15, 17, 115, 117) with in each case one rolled portion (19, 20) in such a way that the pump housing (16, 116) is prestressed against the motor housing (14, 114).

2. Fuel pump according to Claim 1, **characterized in that** the height of the sheet metal shell (18, 118) is at most 50% of the sum of the heights of the pump housing (16, 116) and the motor housing (14, 114).

3. Fuel pump according to Claim 1 or 2, **characterized in that** connector contacts (29, 129) of the stator (21, 121, 221) are enclosed sealingly by the plastic of the motor housing (14, 114).

4. Fuel pump according to one of Claims 1 to 3, **characterized in that** connector lines (9, 109, 209) which lead to the electric motor (10, 110) are routed radially **in that** portion (24, 124, 224) of the motor housing (14, 114) which is manufactured from plastic.

5. Fuel pump according to one of Claims 1 to 4, **characterized in that** that portion (24, 124, 224) of the motor housing (14, 114) which is manufactured from plastic has a connector piece (7, 107, 207) for a fuel line (8, 108).

6. Fuel pump according to Claim 5, **characterized in that** the connector piece (7, 107, 207) is guided radially away from the motor housing.

7. Fuel pump according to Claim 5 or 6, **characterized in that** the connector piece (7, 207) is arranged at the axial height of the stator (21, 221).

8. Fuel pump according to one of Claims 5 to 7, **characterized in that** a cover (28, 128), leading to the connector piece (7, 107, 207), of a channel (13, 113) is sealed on that portion (24, 124, 224) of the motor housing (14, 114) which is manufactured from plastic.

9. Fuel pump according to Claim 8, **characterized in that** a portion of the fuel-conducting channel (13) is routed parallel to the axis of the rotor (22) from the end which faces away from the pump housing (16) into the motor housing (14).

10. Fuel pump according to one of Claims 1 to 9, **characterized in that** the rotor (22, 122) of the electric motor (10, 110) is mounted with one end on the pump housing (16, 116) and with the other end **in that** portion (24, 124, 224) of the motor housing (14, 114) which is manufactured from plastic.

11. Fuel pump according to Claim 10, **characterized in that** that portion (24, 124, 224) of the motor housing (14, 114) which secures the stator (21, 121, 221) has an open side which faces the pump housing (16, 116) for the introduction of the rotor (22, 122).

12. Fuel pump according to Claim 10 or 11, **characterized in that** the portion (24, 124, 224) which is manufactured from plastic has supporting arms (26) for supporting the bearing (25) of the rotor (22, 122), and **in that** the channel (13, 113) for conducting the fuel leads through between the supporting arms (26).

13. Fuel pump according to one of Claims 1 to 12, **characterized in that** a radially sealing seal ring (30, 130) is arranged between the pump housing (16, 116) and the sheet metal shell (18, 118).

## Revendications

1. Pompe à carburant (5, 105, 205) avec un moteur électrique (10, 110, 210) et avec un étage de pompe (11, 111, 211), avec un carter de moteur (14, 114) du moteur électrique (10, 110, 210), avec un carter de pompe (16, 116) de l'étage de pompe (11, 111, 211) et avec une enveloppe en tôle (18, 118) venant en prise par derrière avec des bords (15, 17, 115, 117) du carter de moteur (14, 114) et du carter de pompe (16, 116), le carter de moteur (14, 114) étant configuré pour supporter un stator (21, 121, 221) du moteur électrique (10, 110, 210) entourant un rotor (22, 222), le carter de moteur (14, 114) ayant une section (24, 124, 224) en matière plastique supportant le stator (21, 121, 221) ; vu du stator (24, 124, 224), le bord (15, 115) du carter de moteur (14, 114) pour l'enveloppe en tôle (18) étant agencé sur le côté tourné vers le carter de pompe (16, 116), **caractérisée en ce que** l'enveloppe en tôle (18) vient en prise par derrière avec les bords (15, 17, 115, 117) avec un enroulement (19, 20) respectif, de telle sorte que le carter de pompe (16, 116) est précontraint contre le carter de moteur (14, 114).

2. Pompe à carburant selon la revendication 1, **caractérisée en ce que** la hauteur de l'enveloppe en tôle (18, 118) représente au maximum 50 % de la somme des hauteurs du carter de pompe (16, 116) et du carter de moteur (14, 114).

3. Pompe à carburant selon la revendication 1 ou 2, **caractérisée en ce que** des contacts de raccordement (29, 129) du stator (21, 121, 221) sont entourés de manière étanche par la matière plastique du carter de moteur (14, 114) .

4. Pompe à carburant selon l'une quelconque des revendications 1 à 3, **caractérisée en ce que** des conduites de raccordement (9, 109, 209) menant au moteur électrique (10, 110) sont introduites radialement dans la section (24, 124, 224) du carter de moteur (14, 114) fabriquée en matière plastique.

5. Pompe à carburant selon l'une quelconque des revendications 1 à 4, **caractérisée en ce que** la section (24, 124, 224) du carter de moteur (14, 114) fabriquée en matière plastique a une tubulure de raccordement (7, 107, 207) pour une conduite de carburant (8, 108).

6. Pompe à carburant selon la revendication 5, **caractérisée en ce que** la tubulure de raccordement (7, 107, 207) s'éloigne radialement du carter de moteur.

7. Pompe à carburant selon la revendication 5 ou 6, **caractérisée en ce que** la tubulure de raccordement (7, 207) est agencée à la hauteur axiale du stator (21, 221).

8. Pompe à carburant selon l'une quelconque des revendications 5 à 7, **caractérisée en ce qu'**un couvercle (28, 128) d'un canal (13, 113) menant à la tubulure de raccordement (7, 107, 207) est étanchéifié sur la section (24, 124, 224) du carter de moteur (14, 114) fabriquée en matière plastique.

9. Pompe à carburant selon la revendication 8, **caractérisée en ce qu'**une section du canal acheminant du carburant (13) est introduite parallèlement à l'axe du rotor (22) à partir de l'extrémité détournée du carter de pompe (16) dans le carter de moteur (14).

10. Pompe à carburant selon l'une quelconque des revendications 1 à 9, **caractérisée en ce que** le rotor (22, 122) du moteur électrique (10, 110) est monté par une extrémité sur le carter de pompe (16, 116) et par l'autre extrémité dans la section (24, 124, 224) du carter de moteur (14, 114) fabriquée en matière plastique.

11. Pompe à carburant selon la revendication 10, **caractérisée en ce que** la section (24, 124, 224) du carter de moteur (14, 114) supportant le stator (21, 121, 221) a un côté ouvert tourné vers le carter de pompe (16, 116) pour l'insertion du rotor (22, 122).

12. Pompe à carburant selon la revendication 10 ou 11, **caractérisée en ce que** la section (24, 124, 224) fabriquée en matière plastique a des bras de soutien (26) pour soutenir le palier (25) du rotor (22, 122) et **en ce que** le canal (13, 113) pour l'acheminement du carburant passe entre les bras de soutien (26).

13. Pompe à carburant selon l'une quelconque des revendications 1 à 12, **caractérisée en ce qu'**une bague d'étanchéité (30, 130) assurant l'étanchéité radiale est agencée entre le carter de pompe (16, 116) et l'enveloppe en tôle (18, 118).
